Europäisches Patentamt

**European Patent Office**

Office européen des brevets

(11) Publication number: **0 221 039**
**B1**

## EUROPEAN PATENT SPECIFICATION

(45) Date of publication of the patent specification: **27.12.89**

(51) Int. Cl.⁴: **F16D 23/06**, F16H 57/00

(21) Application number: **86850368.1**

(22) Date of filing: **23.10.86**

(54) **Synchronizing means.**

(30) Priority: **29.10.85 FI 854249**

(43) Date of publication of application:
**06.05.87 Bulletin 87/19**

(45) Publication of the grant of the patent:
**27.12.89 Bulletin 89/52**

(84) Designated Contracting States:
**AT DE FR GB SE**

(56) References cited:
**DE-A- 2 122 947**
**DE-A- 2 214 852**
**DE-B- 1 284 309**
**FR-A- 870 198**
**FR-A- 1 511 513**
**GB-A- 1 125 946**
**GB-A- 1 584 064**

(73) Proprietor: **Valmet Oy, Punanotkonkatu 2,
SF-00130 Helsinki 13(FI)**

(72) Inventor: **Kananen, Teppo, Saikkosentie 24,
SF-40250 Jyväskylä(FI)**

(74) Representative: **Rostovanyi, Peter et al, AWAPATENT
AB Box 5117, S-200 71 Malmö(SE)**

ACTORUM AG

## Description

The present invention concerns a synchronizing means for gearboxes in which axially on one side of a gear wheel disposed to be freely rotatable on a shaft have been arranged, for engaging the gear step corresponding to said gear wheel, first synchronizing elements, comprising a synchronizing means, known in itself in the art, operated by a gear shifter, second synchronizing elements having been disposed on the shaft axially on the opposite side of the gear wheel relative to the first synchronizing elements, said gear wheel having been arranged to be movable axially between first and second synchronizing elements.

It is nowadays a general trend to construct the gearboxes of vehicles, working machines and equivalent to be small in size, with small distances between shafts and with relatively close axial spacing of the gear wheels on the shafts. For this reason large-diameter synchronizing rings cannot be used in such gearboxes. The efficiency of synchronizing, i.e. the coupling torque achievable with the synchronizing means and the time consumed in shifting gears, in their turn depend, on the diameter of the synchronizing rings, on the coupling force that is employed and the taper of the synchronizing cones. The coupling force and the taper of the synchronizing cones are not freely changeable because certain limits are imposed on them by the materials used in making the gearbox. The diameter of the synchronizing cone cannot be increased to be large because the size of the gearbox would then also increase. Thus, the problem is that it is not feasible to form in the synchronizing means a large enough cone by the aid of which adequate accelerations and decelerations of the gear wheels could be produced. This problem is particularly salient in heavy equipment and in working machines.

Attempts have been made to improve the efficiency of synchronizing, among other things, by inserting between the traditional pair of synchronizing cones, additional cones (for instance two of them) by the aid of which the efficiency of synchronizing could be greatly enhanced. This type of solution is however imperfect in the respect that the additional cones increase the diameter of the synchronizing means and its axial length. Moreover, the friction heat liberated during synchronizing is concentrated in a small area, thus causing overheating problems. As a result the whole gearbox has to be built rather much larger.

The object of this invention is to provide a synchronizing means in which the above-mentioned problems and drawbacks have been eliminated or at least reduced in a competent manner.

With the present invention an improvement is obtained in comparison with synchronizing means of prior art. The synchronizing means according to the invention is of the type stated by way of introduction and is characterised in that between the gear wheel and the second synchronizing elements has been disposed at least one axially acting spring, which is held at one end by the unrotatably with reference to the shaft disposed body part of the second synchronizing elements and at its opposite end by a thrust bearing disposed between the gear wheel and the spring, said gear wheel having been arranged, when the gear step consistent with said gear wheel is being engaged, to move under effect of the first synchronizing elements against the second synchronizing elements in order to make them operate substantially simultaneously with the first synchronizing elements, and that after synchronizing has taken place the second synchronizing elements have been arranged to disengage from operation, pushed by said spring.

Further features of the synchronizing means according to the invention are stated in the appended claims.

As an example of the prior art technique on which the present invention is based, mention should be made of the synchronizing mechanism which is disclosed in GB-A 1 584 064 and on which the preamble of claim 1 has been based. This known mechanism comprises, like the synchronizing means according to the invention, a shaft, a gear wheel, synchronizing elements, a check plate of body part, and a retaining ring or stop ring.

In the synchronizing means according to the present invention, however, the said axially acting spring has been disposed between the gear wheel and the second synchronizing elements, said spring being held at one end by the body part of the second synchronizing elements and at its opposite end by the thrust bearing which is disposed between the gear wheel and the spring. The synchronizing mechanism according to said GB publication comprises no such spring between the gear wheel and the check plate and also no thrust bearing resting against the gear wheel. As to the function, this means that when the gear is engaged in the synchronizing means according to the invention, the gear wheel is moved against the spring action in the direction of the second synchronizing elements. Accordingly, after the synchronizing and coupling have taken place, the spring moves the second synchronizing elements away from the gear wheel, and in this manner the spring disengages the second synchronizing elements.

Since the mechanism according to the GB publication does not have a corresponding spring, it is not ensured that the outer cone surface of the check plate is disengaged from the internal cone surface facing the gear wheel, when the gear has been engaged and the synchronizing has taken place. The function of the mechanism according to the GB publication is unreliable, since said cone surfaces can get caught on each other in the final stage of the coupling. This lack of reliability is a direct consequence of the fact that there is no spring. According to the present invention, however, the spring disposed between the synchronizing elements and the gear wheel is most essential because it disengages immediately the synchronizing elements and the gear wheel from each other, when a shift ring has passed an inhibitor ring.

These differences in construction and function are clearly defined in the characterising clause of claim 1.

Among the advantages of the invention over the designs of prior art may be stated the following. In the design of the invention, a synchronizing means of small diametral size can be used and this enables small shaft spacings to be employed, whereby the gearbox will be small in size. The friction heat liberated in the synchronizing process is divided between both ends of the gear wheel, whereby overheating is avoided. The synchronizing efficiency is considerably better than in prior art designs and as a result the coupling forces can be held low, and the time consumed in engaging the gear steps is short. The sole drawback is that the axial length of the gearbox is slightly greater than that in the case of a conventional synchronizing means being used.

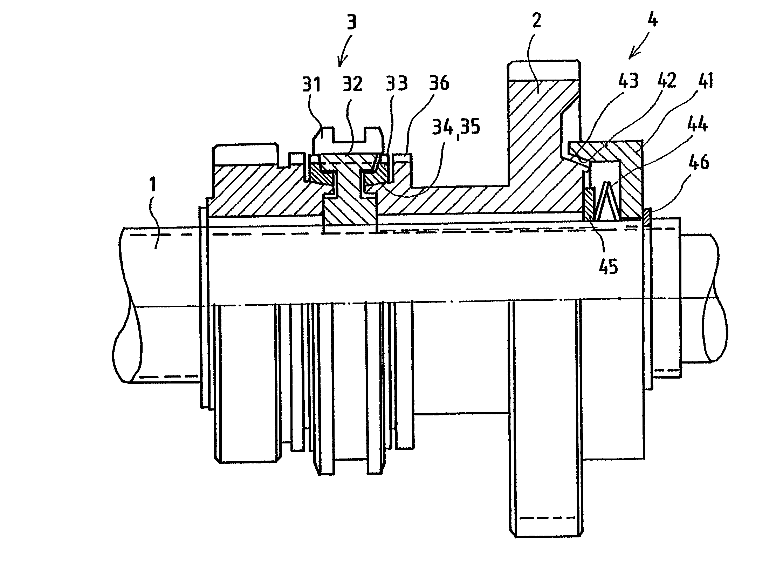

The invention is more closely described in the following, referring to the figures of the drawing. In the figures is presented a synchronizing means according to the invention, in partly sectioned elevational view.

In the figure are shown, on the shaft 1, a gear wheel 2 and a synchronizing means, this synchronizing means comprising first synchronizing elements 3 and second synchronizing elements 4. As shown in the figure, the first synchronizing elements 3 and the second synchronizing elements 4 are located axially on different sides of the gearwheel 2. The first synchronizing elements 3 consist of a conventional synchronizing means, comprising a shift ring 31 movable in axial direction by means of a gear shifter. The shift ring 31 has in conventional manner been provided with inside coupling teeth 32. Between the shift ring 31 and the gear wheel 2 is provided an inhibitor ring 33, provided with teeth on the outer rim. The inhibitor ring 33 has an inner coupling cone 34, and on the gear wheel 2 has similarly been formed an outside coupling cone 35 mating with said inside coupling cone 34. The gear wheel 2 is moreover provided with outside coupling teeth 36 engaging with the inside coupling teeth 32 of the shift ring 31.

On the axially opposite side of the gear wheel 2, relative to the first synchronizing elements 3, have been provided second synchronizing elements 4, of which only one advantageous embodiment has been depicted in the figure. In the embodiment of the figure, the second synchronizing elements 4 comprise a body part 41 which is secured to be unrotatable with reference to the shaft 1 and its axial movement being prevented, at least in the direction away from the gear wheel 2. In order to prevent said axial movement, a stop ring 46 has been provided on the shaft 1. The body part 41 may naturally be fully rigidly mounted on the shaft 1 so that the body part 41 cannot move axially in either direction on the shaft 1.

In the embodiment of the figure there has been formed, on the body part 41, a first friction surface 42 facing substantially towards the gear wheel 2, and on the gear wheel has, in conformity therewith, been machined a second friction surface 43 mating with said first friction surface 42. In the embodiment of the figure, the friction surfaces 42 and 43 are conical in such manner that the first friction surface 42 is an inside cone and the second friction surface 43 is an outside cone. Naturally, the friction surfaces may equally be disposed so that the first friction surface 42 has been shaped as an outside cone and, correspondingly, the second friction surface 43 has been formed as an inside cone. It should be noted in this connection, however, that conical shape of the friction surfaces 42 and 43 is not indispensbale: said friction surfaces may equally be provided in another way, as will become apparent later on in this disclosure.

Between the body part 41 and the gear wheel 2 has in the embodiment of the figure been disposed a spring 44, which tends to push the body part 41 and the gear wheel 2 axially away from each other so that the friction surfaces 42 and 43 are kept apart. In the embodiment depicted, a cup spring is used for the spring 44, but another type of spring may equally be used to this purpose, for instance a helical spring. There may also be more than one spring, in which case the springs may for instance be arranged in a circle around the shaft 1. Since the body part 41 has been disposed to be unrotatable on the shaft 1, while the gear wheel 2 has been disposed to be freely rotatable on the shaft 1, an axial thrust bearing must be provided between said spring 44 and gear wheel 2 in order to eliminate the friction between said spring 44 and gear wheel 2, this thrust bearing being indicated with reference numeral 45 in the figure.

The mode of operation of the synchronizing means presented in the figure is as follows. When it is desired to engage in the gearbox the gear step corresponding to the gear wheel 2, the gear shifter (not depicted) is operated to move the shift ring 31 axially towards the gear wheel 2, that is, to the right in the figure. The shift ring 31 then also moves, along with itself, the inhibitor ring 33 to the right, whereby the coupling cones 34 and 35 on the inhibitor ring 33 and on the gear wheel 2 come into contact. Furthermore, the shift ring 31 also moves along with itself the gear wheel 2 to the right, against the compressive force of the spring 44. The spring 44 is compressed, and the first friction surface 42 on the body part 41 and the second friction surface 43 on the gear wheel 2 are brought into contact. When the friction surfaces 42 and 43 between the second synchronizing elements 4 and the gear wheel 2 meet, a friction torque arises between the gear wheel 2 and the shaft 1, this torque having the same direction as the friction torque produced by the first synchronizing elements 3. The friction torque caused by said second synchronizing elements 4 is directly proportional to the axial force acting on the first synchronizing elements 3.

The friction torque thus achieved is considerably higher than the friction torque formed with the first synchronizing elements 3 alone, and therefore the accelerations and decelerations of the gear wheel 2 in relation to the shaft 1 can be made considerably higher than before, whereby the synchronizing will be more efficient and the time required before the gear step comes on is shorter. When the synchronizing has been completed, the shift ring 31 is enabled to move in over the coupling teeth 36 on the gear wheel 2, whereby the gear step consistent with the gear wheel 2 has become engaged. Immediately after the synchronizing process has been completed, the spring 44 pushes the first and second friction surfaces 42,43 apart and pushes the gear wheel 2 into its correct position relative to the gear wheel with which its is in mesh.

If the friction surfaces 42,43 on the second synchronizing elements 4 are conical, the cones of said friction surfaces 42,43 should have sufficiently great inclinations so that on completed synchronizing the detachment of the friction surfaces 42,43 might take place at once. In the case that conical friction surfaces are used, it is always mandatory, in order to ensure the detachment of the friction surfaces 42,43, to use between the body part 41 and the gear wheel 2 a spring 44 by means of which said detachment is ensured.

It was already observed in the foregoing description that the friction surfaces 42 and 43 are not necessarily conical. Said frition surfaces may also be planar, in a plane which is transversal to the central axis of the shaft 1. When such planar friction surfaces are employed, they would come apart even if there would be no spring 44 between the body part 41 and the gear wheel 2. It is however advantageous also in the case of planar friction surfaces to use a spring 44 because detachment of the contact between the friction surfaces is important at the time when ultimate coupling of the coupling teeth takes place. Furthermore, the spring 44 is helpful in moving the gear wheel 2 after completed coupling axially into its proper position, especially when gear wheels with straight teeth are used, in which case no axial force components acting on the gear wheels are derived from the tooth forces. When planar friction surfaces are employed, it is possible to use in the capacity of second synchronizing elements 4, moreover, for instance a conventional multi-disk clutch by means of which good adhesion is obtained between the friction surfaces and, on the other hand, easy detachment. It is advantageous in connection with a multi-disk clutch as well, to use for ensuring detachment, a spring 44 interposed between the body part 41 and the gear wheel 2.

## Claims

1. A synchronizing means for gearboxes in which axially on one side of a gear wheel (2) disposed to be freely rotatable on a shaft (1) have been arranged, for engaging the gear step corresponding to said gear wheel (2), first synchronizing elements (3), comprising a synchronizing means, known in itself in the art, operated by a gear shifter, second synchronizing elements (4) having been disposed on the shaft (1) axially on the opposite side of the gear wheel (2), relative to the first synchronizing elements (3), and comprising a body part (41) being unrotatable with reference to the shaft, said gear wheel (2) having been arranged to be movable axially between said first and second synchronizing elements (3, 4) characterized in that between the gear wheel (2) and the second synchronizing elements (4) has been disposed at least one axially acting spring (44), which is held at one end by the unrotatably with reference to the shaft (1) disposed body part (41) of the second synchronizing elements (4) and at its opposite end by a thrust bearing (45) disposed between the gear wheel (2) and the spring (44), said gear wheel (2) having been arranged, when the gear step consistent with said gear wheel (2) is being engaged, to move under effect of the first synchronizing elements (3) against the second synchronizing elements (4) in order to make them operate substantially simultaneously with the first synchronizing elements (3), and that after synchronizing has taken place the second synchronizing elements (4) have been arranged to disengage from operation, pushed by said spring (44).

2. Synchronizing means according to claim 1, characterized in that on the body part (41) has been formed a first friction surface (42), and that on the gear wheel (2) has been formed a second friction surface (43), mating with the first friction surface (42).

3. Synchronizing means according to claim 2, characterized in that the first friction surface (42) comprises an inside conical surface and the second friction surface (43) comprises an outside conical surface.

4. Synchronizing means according to claim 2, characterized in that said friction surfaces are planar, with their plane perpendicular against the central axis of the shaft (1).

5. Synchronizing means according to claim 1, characterized in that the second synchronizing elements (4) comprise a multiple disk clutch, consisting of a body part and of friction disks provided between the body part and the gear wheel (2).

## Patentansprüche

1. Synchronisiereinrichtung für Getriebe, in denen axial an einer Seite eines Zahnrades (2), welches so angeordnet ist, daß es auf einer Welle (1) frei drehbar ist, zum Einrücken der dem Zahnrad (2) entsprechenden Getriebestufe erste Synchronisierelemente (3) angeordnet worden sind, die eine als solche bekannte Synchronisiereinrichtung aufweisen, welche mittels eines Gangschalters betätigt wird, wobei zweite Synchronisierelemente (4) auf der Welle (1) in bezug auf die ersten Synchronisierelemente (3) axial an der entgegengesetzten Seite des Zahnrades (2) angeordnet worden sind, und die einen Körperteil (41) aufweisen, der in bezug auf die Welle unrotierbar ist, wobei das Zahnrad (2) so angeordnet worden ist, daß es axial zwischen den ersten und zweiten Synchronisierelementen (3, 4) beweglich ist, dadurch gekennzeichnet, daß zwischen dem Zahnrad (2) und den zweiten Synchronisierelementen (4) mindestens eine axial wirkende Feder (44) angeordnet worden ist, die an einem Ende von dem unrotierbar in bezug auf die Welle (1) angeordneten Körperteil (41) der zweiten Synchronisierelemente (4) und an ihrem entgegengesetzten Ende von einem zwischen dem Zahnrad (2) und der Feder (44) angeordneten Drucklager (45) gehalten ist, wobei das Zahnrad (2) so angeordnet worden ist, daß es sich beim Herstellen des Eingriffs der mit dem Zahnrad (2) übereinstimmenden Getriebestufe unter der Wirkung der ersten Synchronisierelemente (3) gegen die zweiten Synchronisierelemente (4) bewegt, um diese zu einer Betätigung im wesentlichen gleichzeitig mit den ersten Synchronisierelementen (3) zu veranlassen, und daß, nachdem die Synchronisierung stattgefunden hat, die zweiten Synchronisierelemente (4) so angeordnet worden sind, daß sie sich, geschoben von der Feder (44), von der Betätigung lösen.

2. Synchronisiereinrichtung nach Anspruch 1, dadurch gekennzeichnet, daß am Körperteil (41) eine erste Reibfläche (42) gebildet worden ist, und daß am Zahnrad (2) eine zweite Reibfläche (43) gebildet worden ist, die zu der ersten Reibfläche (42) paßt.

3. Synchronisiereinrichtung nach Anspruch 2, dadurch gekennzeichnet, daß die erste Reibfläche (42) eine innere konische Oberfläche aufweist, und daß die zweite Reibfläche (43) eine äußere konische Oberfläche aufweist.

4. Synchronisiereinrichtung nach Anspruch 2, dadurch gekennzeichnet, daß die Reibflächen eben sind, wobei ihre Ebene senkrecht gegen die Mittelachse der Welle (1) ist.

5. Synchronisiereinrichtung nach Anspruch 1, dadurch gekennzeichnet, daß die zweiten Synchronisierelemente (4) eine Mehrscheibenkupplung aufweisen, die aus einem Körperteil und aus zwischen dem Körperteil und dem Zahnrad (2) vorgesehenen Reibscheiben besteht.

**Revendications**

1. Moyen de synchronisation pour boîtes de vitesses dans lequel ont été agencés axialement sur un côté d'un pignon (2) disposé de façon à pouvoir tourner librement sur un arbre (1), pour engager l'étage de transmission correspondant au pignon (2), des premiers éléments de synchronisation (3), comprenant un moyen de synchronisation, connu en lui-même dans l'art antérieur, actionné par un dispositif de changement de vitesses, des seconds moyens de synchronisation (4) ayant été disposés sur l'arbre (1) axialement sur le côté opposé du pignon (2) par rapport aux premiers éléments de synchronisation et comprenant une partie de corps (41) ne pouvant pas être mise en rotation par rapport à l'arbre, le pignon (2) ayant été agencé de façon à pouvoir se déplacer axialement entre les premiers et seconds éléments de synchronisation (3, 4), caractérisé en ce qu'entre le pignon (2) et les seconds éléments de synchronisation (4), il a été prévu au moins un ressort agissant axialement (44) qui est maintenu sur une extrémité par la partie de corps (41), disposée de façon à ne pas pouvoir tourner par rapport à l'arbre (1), appartenant aux seconds éléments de synchronisation (4) et sur son extrémité opposée par un palier de butée (45) disposé entre le pignon (2) et le ressort (44), le pignon (2) ayant été agencé, lorsque le l'étage de transmission compatible avec le pignon (2) a été engagé, pour se déplacer sous l'effet des premiers éléments de synchronisation (3) contre les seconds éléments de synchronisation (4) afin de les faire fonctionner sensiblement de façon simultanée avec les premiers éléments de synchronisation (3), et en ce qu'après la synchronisation, les seconds éléments de synchronisation (4) ont été agencés de façon à être hors fonctionnement, poussés par le ressort (44).

2. Moyen de synchronisation selon la revendication 1, caractérisé en ce que sur la partie de corps (41) a été formée une première surface de friction (42) et en ce que sur le pignon (2) a été formée une seconde surface de friction (43) épousant la première surface de friction (42).

3. Moyen de synchronisation selon la revendication (2), caractérisé en ce que la première surface de friction (42) comprend une surface conique interne et la seconde surface de friction (43) comprend une surface conique externe.

4. Moyen de synchronisation selon la revendication 2, caractérisé en ce que les surfaces de friction sont planes avec leurs plans perpendiculaires par rapport à l'axe géométrique centrale de l'arbre (1).

5. Moyen de synchronisation selon la revendication 1, caractérisé en ce que les seconds éléments de synchronisation (4) comprennent un embrayage multidisque, consistant en une partie de corps et en des disques de friction prévus entre la partie de corps et le pignon (2).